# EUROPÄISCHE PATENTSCHRIFT

(11) **EP 0 722 846 B1**
(45) Veröffentlichungstag und Bekanntmachung des Hinweises auf die Patenterteilung: **04.02.1998**
(21) Anmeldenummer: 95108219.7
(22) Anmeldetag: 30.05.1995
(51) Int. Cl.: B60B 33/00, B62B 3/14

(54) **Transportwagen**
Transport trolley
Chariot de transport

(30) Priorität: 18.01.1995 DE 29500742 U; 08.03.1995 DE 29503920 U
(43) Veröffentlichungstag der Anmeldung: 24.07.1996
(73) Patentinhaber: Wanzl GmbH & Co. Entwicklungs-KG, D-89336 Leipheim (DE)
(72) Erfinder: Wanzl, Rudolf, D-89340 Leipheim (DE)

(56) Entgegenhaltungen:
- DE-A- 3 117 767
- US-A- 3 627 344

## Beschreibung

Die Erfindung betrifft einen Transportwagen, mit einem Fahrgestell, mit am rückwärtigen Ende des Fahrgestelles nach oben strebenden Holmen, die eine Schiebeeinrichtung tragen, mit einem Abstellbereich für Gepäck, Ware und dergleichen und mit zwei an der Rückseite des Fahrgestelles befindlichen Knotenstücken, wobei jedes Knotenstück einen Befestigungsbereich zum Tragen eines Holmes aufweist und am Befestigungsbereich zwei Wände vorgesehen sind, die zum Tragen eines zum Fahrgestell gehörenden Rades bestimmt sind.

In der US-A-3 627 344 ist eine Einrichtung zur Umwandlung eines 2-rädrigen Wagens in einen 4-rädrigen Wagen beschrieben. Hierzu sind dessen Holme ebenfalls in Knotenstücke einfügbar, wobei die Knotenstücke zur Vorderachse gehören. Die Knotenstücke sind als klammerartige Teile gestaltet, an dessen weniger als kreisrund ausgebildeten Befestigungsbereich sich unmittelbar zwei Wände anschließen, die zur Aufnahme der Vorderachse des Wagens bestimmt sind. Durch Zusammenpressen der Wände mit je einem Schraubmittel werden sowohl die Vorderachse, als auch die Holme mit den Knotenstücken verspannt. Mit der eben beschriebenen Einrichtung ist es möglich, die Vorderachse nebst den beiden Rädern einfach und schnell am Wagen anzubringen oder von diesen, abzunehmen.

Die DE-A-31 17 767 beschreibt einen Schubgepäckwagen, dessen hintere Räder in knotenartig ausgebildeten Abschnitten gelagert sind. Diese Abschnitte bestehen aus je einem gabelartigen Teil zur Aufnahme je eines Rades wobei Endbereiche des eine Ladefläche bildenden Rahmens und nach oben gerichtete Holme, die zur Schiebeeinrichtung führen, mit den gabelartigen Teilen verschweißt sind. Diese Art der Konstruktion ist aufwendig und teuer.

Die Aufgabe der Erfindung besteht darin, einen gattungsgemäßen Transportwagen so weiterzuentwickeln, daß die Knotenstücke auf einfache Weise herstellbar sind, daß sie eine einfache Anbindung der nach oben strebenden Holme erlauben und daß sie dazu beitragen, weitere der Funktion des Transportwagens dienende Teile am Transportwagen unterbringen zu können.

Die Lösung der Aufgabe besteht darin, daß die Knotenstücke Teile eines Strangpreßprofiles sind, daß der Befestigungsbereich der Knotenstücke hohl ist und daß außerhalb eines jeden Befestigungsbereiches zwischen den Wänden des Knotenstückes und dem Rad ein Raum zur Aufnahme eines Teils einer Wirkeinrichtung, z.B. einer Bremseinrichtung, gebildet ist.

Dadurch ergeben sich folgende Vorteile:
die Knotenstücke sind durch einfaches Ablängen vom Strangpreßprofil herstellbar, wobei lediglich die Bohrungen für die Radachsen angebracht werden müssen und wahlweise eine weitere, den, vorteilhaften Aussehen dienende Nachbearbeitung vorgenommen werden kann
- die Knotenstücke sind bevorzugt aus eloxierfähigem Aluminium, beispielsweise aus AlMgSi0,5F28, gestaltet
- die Stäbe zur Bildung des Abstellbereiches und die Holme, welche die Schiebeeinrichtung tragen, sind vorteilhalterweise ebenfalls aus Strangpreßprofilen mit unterschiedlichen Querschnittsformen gestaltet, welche jedoch annähernd oder bevorzugt die gleichen Werkstoffeigenschaften aufweisen, wie die Knotenstücke.
- Sind die Werkstoffeigenschaften der genannten Teile einander angepaßt, können die Knotenstücke, die Stäbe und die Holme einheitlich eloxiert werden. Diese Maßnahme garantiert eine harte und witterungsbeständige Oberfläche
- sind die Stäbe aus einem Strangpreßprofil gefertigt, können ebenfalls in Längsrichtung der Holme sich erstreckende hinterschnittene Vertiefungen vorgesehen sein, in welche sich streifenförmiges Werbematerial einsetzen läßt
- der zwischen den Wänden eines jeden Knotenstückes und dem Rad verbliebene Raum eignet sich hervorragend zur Unterbringung eines Teils einer Wirkeinrichtung. Im Falle einer als hydraulische Bremseinrichtung gestaltete Wirkeinrichtung können z.B. ein Bremszylinder und/oder weitere Teile bequem im vorgeschlagenen Raum untergebracht werden. Auch bei einer Reparatur braucht, sofern vorhanden, die Abdeckung nur abgenommen zu werden, um beschädigte oder zum Austausch bestimmte Teile der Wirkeinrichtung bequem erreichen zu können.

Die Erfindung wird anhand von zwei Ausführungsbeispielen näher erläutert. Es zeigt
Fig. 1 einen Transportwagen;
Fig. 2 den Querschnitt eines Knotenstückes;
Fig. 3 den Querschnitt eines der Stäbe;
Fig. 4 den Querschnitt eines Holmes;
Fig. 5 einen Transportwagen mit einer die hinteren Räder beeinflussenden Wirkeinrichtung sowie
Fig 6 ein Knotenstück mit einem Rad.

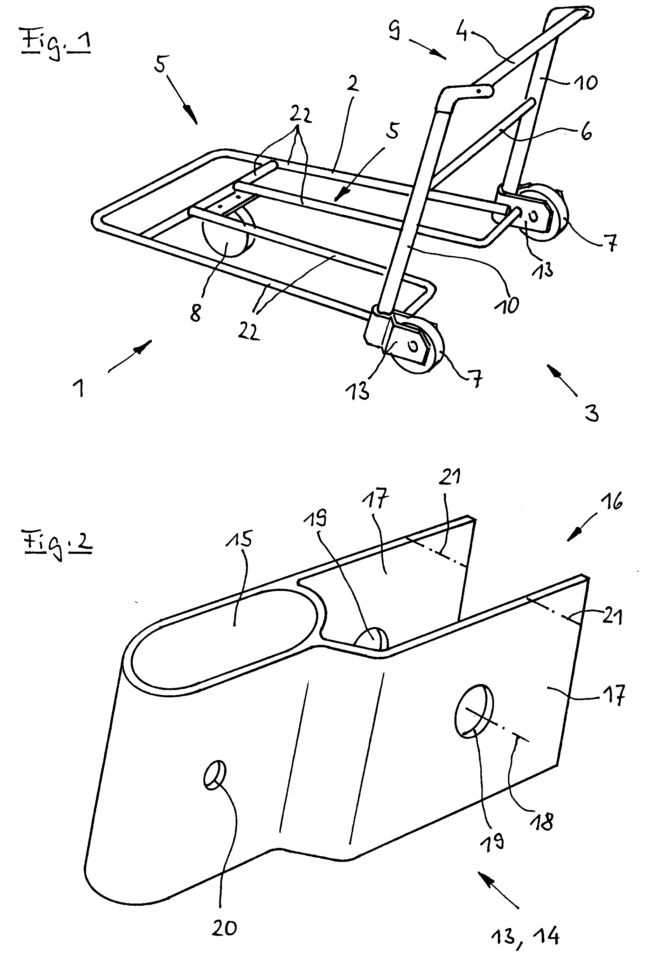

Der in Fig. 1 dargestellte Transportwagen 1 weist ein Fahrgestell 2 auf, von dessen hinterem Ende 3 zu beiden Seiten je ein Holm 10 nach oben strebt. Die beiden Holme 10 tragen eine bevorzugt quer zur Schiebeeinrichtung des Transportwagens 1 sich erstreckende Schiebeeinrichtung 4. Das Fahrgestell 2 ist mit einem Abstellbereich 5 für Gepäck, Ware und dergleichen ausgestattet. Der Abstellbereich 5 weist Stäbe 22 auf, von denen zumindest ein Teil an zwei an der Rückseite des Fahrgestelles 2 befindlichen, die hinteren Räder 7 des Transportwagens 1 tragenden Knotenstücken 13 befestigt sind. Als Befestigungsmöglichkeiten lassen sich Anschrauben, Anschweißen oder auch gegen Lösen gesichertes Stecken nennen. Die Holme 10 lassen sich bevorzugt von oben in die Knotenstücke 13 einfügen und sichern. An der Vorderseite des Transportwagens 1 ist wenigstens eine Lenkrolle 8 vorgesehen. Die Holme 10 sind durch mindestens einen Querstab 6 verbunden. An den Holmen 10 kann ein weiterer Abstellbereich 9 etwa in Form eines Korbes vorgesehen sein.
Vereinfacht und ebenfalls räumlich dargestellt zeigt Fig. 2 den Querschnitt eines Knotenstückes 13. Das von einem Strangpreßprofil 14 abgelängte Knotenstück 13 weist im Beispiel einen für einen Holm 10 bestimmten Befestigungsbereich 15 und einen Gabelbereich 16 zum Halten eines der Räder 7 auf. Der Befestigungsbereich 15 ist hohl gestaltet. Neben der hier gezeigten Langlochform sind für den Befestigungsbereich 15 auch andere Querschnittsformen denkbar. An den Befestigungsbereich 15 schließen zwei ebenfläche Wände 17 an, die auf Abstand gehalten eine Gabel zum Tragen eines Rades 7 bilden. In jeder Wand 17 ist eine auf einer gemeinsamen Achse 18 liegende, horizontal angeordnete Bohrung 19 vorgesehen, die zur Aufnahme der Radachse eines Rades 7 bestimmt ist. Im Befestigungsbereich 15 sind bevorzugt ebenfalls zwei Bohrungen oder Durchbrüche 20 vorgesehen, die zum lösbaren Sichern eines Holmes 10 bestimmt sind. Natürlich lassen sich die Knotenstücke 13 im Sinne einer zweckmäßigen Formgestaltung noch weiter bearbeiten. Die strichpunktiert gezeichneten Schnittkanten 21 sollen dies veranschaulichen. Die hier gewählte Form der Knotenstücke 13 läßt ein rechtes und ein linkes Knotenstück 13 entstehen. Setzt man den Steckbereich 15 symmetrisch zu den beiden Wänden 17, kann aus einem einzigen Strangpreßprofil 14 eine 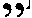 rechtes" und ein 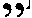 linkes" Knotenstück 13 gefertigt werden, die vollkommen gleich sind.

Fig. 3 zeigt den bevorzugten Querschnitt eines der Stäbe 22. Alle Stäbe 22 weisen gewöhnlich diesen Querschnitt auf. Der Stab 22 ist Teil eines hohlen Strangpreßprofiles 23 das an seinem oberen Bereich eine in Längsrichtung sich erstreckende, mit Hinterschneidungen ausgestattete Vertiefung 24 aufweist, um ein bevorzugt aus rutschhemmendem Kunststoff gestaltetes Auflageprofil 25 bevorzugt schnappschlüssig aufzunehmen. Das Auflageprofil 25 bildet Auflagestellen für abzustellendes Gepäck Ware usw.

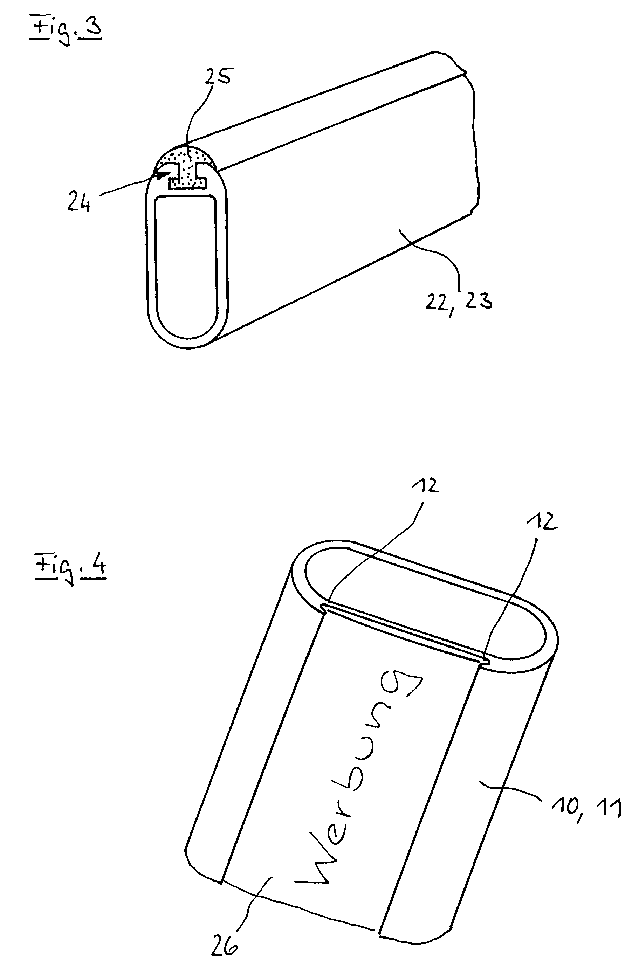

In Fig. 4 ist der Querschnitt des für die Herstellung der Holme 10 bestimmten Strangpreßprofiles 11 dargestellt. Es ist als Hohlprofil gestaltet und weist in Längsrichtung der Holme 10 sich erstreckende hinterschnittene Vertiefungen 12 auf, in die sich streifenförmiges Werbematerial 26 einsetzen läßt. Die Holme 10 sind Teile des Strangpreßprofiles 11. In die Vertiefung 12 kann wiederum ein nicht näher dargesteller Träger einfügbar sein, der ebenfalls zum Tragen von Werbematerial bestimmt ist.

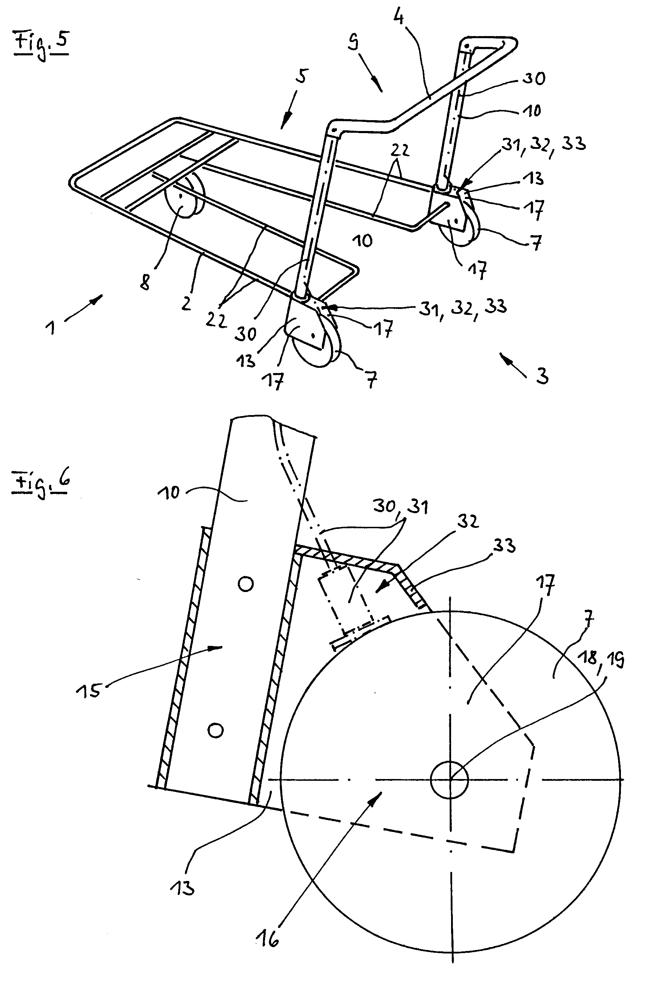

Der in Fig. 5 dargestellte Transportwagen entspricht in seinem Grundaufbau dem in Fig. 1 beschriebenen Transportwagen. Zusätzlich ist nun am Transportwagen eine Wirkeinrichtung 30 vorgesehen, die beispielsweise von der Schiebeeinrichtung 4 oder von einer separaten, nicht näher dargestellten Betätigungsvorrichtung ausgehend nach unten zu den hinteren Rädern 7 führt und die geeignet ist, die Räder 7 auf irgend eine zweckmäßige Art zu beeinflussen. Als Beispiel für eine Wirkeinrichtung 30 bietet sich eine hydraulische, durch Verschwenken der Schiebeeinrichtung 4 beeinflußbare, nicht näher dargestellte Bremseinrichtung an. Ein Teil 31 der Wirkeinrichtung 30 ist in zweckmäßiger Weise, und wie in Fig. 6 ausführlich beschrieben, im verbliebenen freien Raum 32 untergebracht, der sich bei jedem Knotenstück 13 zwischen den beiden Wänden 17 und dem Rad 7 befindet. Der freie Raum 32 kann nach oben hin durch eine lösbar angeordnete Abdeckung 33 abgedeckt sein.

Vereinfacht dargestellt zeigt Fig. 6 ein Knotenstück 13. Das Knotenstück 13 weist im Beispiel einen für einen Holm 10 bestimmten Befestigungsbereich 15 und einen Gabelbereich 16 zum Halten eines der Räder 7 auf. Der Befestigungsbereich 15 ist bevorzugt hohl oder nutenförmig gestaltet, so daß ein Holm 10 von oben her in den Befestigungsbereich eingefügt und gegen Lösen gesichert werden kann. An den Befestigungsbereich 15 schließen zwei ebenflächige Wände 17 an, die auf Abstand gehalten eine Gabel zum Tragen eines Rades 7 bilden. In jeder Wand 17 ist eine auf einer gemeinsamen Achse 18 liegende, horizontal angeordnete Bohrung 19 vorgesehen, die zur Aufnahme der Radachse eines Rades 7 bestimmt ist. In der Zeichnung erkennt man, daß zwischen den Wänden 17 und dem Rad 7, also außerhalb des Befestigungsbereiches 15, ein Raum 32 gebildet ist, in dem auf einfachste Weise ein Teil 31 der Wirkeinrichtung 30 untergebracht ist. Dieser nicht näher beschriebene Teil 31, etwa ein Bremszylinder mit einem Teil der Hydraulikleitung und dem Bremsklotz, ist strichpunktiert eingezeichnet. Der Raum 32 ist wahlweise nach oben durch eine Abdeckung 33, beispielsweise durch eine Platte abgedeckt, die mit den Wänden 17 verschraubt oder verrastet ist. Die abnehmbare Abdeckung 33 erleichtert den Zugang zum Raum 32, ohne daß das Rad 7 entfernt zu werden braucht. Bei der Montage oder auch der Demontage des Teils 31 der Wirkeinrichtung 30 ist dies von großem Vorteil. Es kann in jedem Knotenstück 13 ein Teil 31 einer Wirkeinrichtung 30 angeordnet sein. Bei einem praktischen Ausführungsbeispiel kann zwischen den Wänden ein Halter vorgesehen sein, der, mit den Wänden verschraubt, zum Tragen eines der Wirkeinrichtung angehörenden Bremszylinders bestimmt ist. Der Halter kann mit zwei länglichen, Hinterschneidungen aufweisenden Rücken ausgestattet sein, auf die sich die Abdeckung schnappschlüssig aufsetzen läßt. Der Halter kann aber auch Bestandteil der Abdeckung sein. Dann muß die Abdeckung an den Wänden entweder angeschraubt, oder wie bereits erwähnt, mit den Wänden verrastbar angeordnet sein.

Wenn eingangs vermerkt wurde, daß die Knotenstücke 13, die Stäbe 22 und die Holme 10 aus dem gleichen Aluminiumwerkstoff bestehen, so soll dies nur ein Hinweis für eine bevorzugte Ausführungsform sein. Natürlich ist es möglich, zumindest die Holme 10 oder auch die Stäbe 22 aus unterschiedlichem Material herzustellen.

## Patentansprüche

1. Transportwagen (1), mit einem Fahrgestell (2), mit am rückwärtigen Ende (3) des Fahrgestelles (2) nach oben strebenden Holmen (10), die eine Schiebeeinrichtung (4) tragen, mit einen, Abstellbereich (5) für Gepäck, Ware und dergleichen und mit zwei an der Rückseite des Fahrgestelles (2) befindlichen Knotenstücken (13), wobei jedes Knotenstück (13) einen Befestigungsbereich (15) zum Tragen eines Holmes (10) aufweist und am Befestigungsbereich (15) zwei Wände (17) vorgesehen sind, die zum Tragen eines zum Fahrgestell (2) gehörenden Rades (7) bestimmt sind, dadurch **gekennzeichnet**, daß die Knotenstücke (13) Teile eines Strangpreßprofiles sind, daß der Befestigungsbereich (15) der Knotenstücke (13) hohl ist und daß außerhalb eines jeden Befestigungsbereiches (15) zwischen den Wänden (17) und den, Rad (7) ein Raum (32) zur Aufnahme eines Teils einer Wirkeinrichtung (30), z.B. einer Bremseinrichtung, gebildet ist.

2. Transportwagen (1) nach Anspruch 1, dadurch **gekennzeichnet**, daß die Stäbe (22) Teile eines Strangpreßprofiles (23) sind.

3. Transportwagen (1) nach Anspruch 2, dadurch **gekennzeichnet**, daß die Holme (10) Teile eines Strangpreßprofiles (11) sind.

4. Transportwagen (1) nach einem der Ansprüche 1 bis 3, dadurch **gekennzeichnet**, daß zumindest die Knotenstücke (13), bevorzugt jedoch auch die Stäbe (22) und die Holme (10) aus Aluminiumwerkstoff, insbesondere aus AlMgSi0,5F28 hergestellt sind.

5. Transportwagen (1) nach einem der Ansprüche 1 bis 4, dadurch **gekennzeichnet**, daß die Holme (10) von oben her in die Knotenstücke (13) einfügbar sind.

6. Transportwagen (1) nach einem der Ansprüche 1 bis 5, dadurch **gekennzeichnet**, daß in den Wänden (17) je eine auf einer gemeinsamen Achse (18) befindliche horizontal angeordnete Bohrung (19) vorgesehen ist und die Bohrungen (19) zur Aufnahme der Radachse eines Rades (7) bestimmt sind.

7. Transportwagen (1) nach einem der Ansprüche 1 bis 6, dadurch **gekennzeichnet**, daß der Befestigungsbereich (15) der Knotenstücke (13) symmetrisch zu den Wänden (17) angeordnet ist.

8. Transportwagen (1) nach einen, der Ansprüche 1 bis 7, dadurch **gekennzeichnet**, daß das zur Bildung der Stäbe (22) bestimmte Strangpreßprofil (23) an seinem oberen Bereich eine in Längsrichtung sich erstreckende, mit Hinterschneidungen ausgestattete Vertiefung (24) aufweist, die zur Aufnahme eines aus rutschhemmendem Kunststoff bestehenden Auflageprofiles (25) bestimmt ist.

9. Transportwagen (1) nach Anspruch 8, dadurch **gekennzeichnet**, daß das Auflageprofil (25) schnappschlüssig in die Vertiefung (24) einsetzbar ist.

10. Transportwagen (1) nach einem der Ansprüche 1 bis 9, dadurch **gekennzeichnet**, daß das zur Bildung der Holme (10) bestimmte Strangpreßprofil (11) eine in Längsrichtung sich erstreckende hinterschnittene Vertiefung (12) aufweist, die zur Aufnahme von streifenförmigen Werbematerial (26) bestimmt ist.

11. Transportwagen (1) nach Anspruch 10, dadurch **gekennzeichnet**, daß in die Vertiefung (12) ein Träger einfügbar ist, der wiederum zum Tragen von Werbematerial bestimmt ist.

12. Transportwagen (1) nach einen, der Ansprüche 1 bis 11, dadurch **gekennzeichnet**, daß der Raum (32) durch eine Abdeckung (33) abdeckbar ist.

13. Transportwagen (1) nach einem der Ansprüche 1 bis 12, dadurch **gekennzeichnet**, daß die Abdeckung (33) entweder mit den Wänden (17) oder mit einem mit den Wänden (17) verbundenen Halter verrastbar angeordnet ist.

## Claims

1. A trolley (1), having a sub-frame (2), having upwardly-extending uprights (10) at the rear end (3) of the sub-frame (3), which uprights (10) support a pushing device (4), having a depositing region (5) for luggage, goods and the like, and having two attachment fittings (13) located at the rear of the sub-frame (2), each attachment fitting (13) having a securing region (15) for carrying an upright (10) and two walls (17) being provided on the securing legion (15) to support a wheel (7) forming part of the sub-frame (2), characterised in that the attachment fittings (13) are parts of an extruded section, in that the securing region (15) of the attachment fittings (13) is hollow, and in that a space (32) for receiving part of an operative device (30), e.g. a brake, is formed exterior to each securing region (15), between the walls (17) and the wheel (7).

2. A trolley (1) in accordance with Claim 1, characterised in that the bars (22) are parts of an extruded section (23).

3. A trolley (1) in accordance with Claim 2, characterised in that the uprights (10) are parts of an extruded section (11).

4. A trolley (1) in accordance with any one of Claims 1 to 3, characterised in that at least the attachment fittings (13), preferably however also the bars (22) and the uprights (10), are manufactured from an aluminium material, in particular AlMgSiO,5F28.

5. A trolley (1) in accordance with any one of Claims 1 to 4, characterised in that the uprights (10) are insertable into the attachment fittings (13) from above.

6. A trolley (1) in accordance with any one of Claims 1 to 5, characterised in that each of the walls (17) has a horizontally-arranged bore (19), which bores (19) are located on a common axis and are to receive the wheel axle of a wheel (7).

7. A trolley (1) in accordance with any one of Claims 1 to 6, characterised in that the securing region (15) of the junction sites (13) is arranged symmetrically with regard to the walls (17).

8. A trolley (1) in accordance with any one of Claims 1 to 7, characterised in that the upper region of the extruded section (23) to form the bars (22) has a recess (24) which extends in the longitudinal direction, is provided with undercuts and is to receive a supporting section (25) composed of a slide-inhibiting plastics material.

9. A trolley (1) in accordance with Claim 8, characterised in that the supporting section (25) can be inserted into the recess (24) in a snap-fit locking manner.

10. A trolley (1) in accordance with any one of Claims 1 to 9, characterised in that the extruded section (11) to form the uprights (10) has a recess (12) which extends in the longitudinal direction, is undercut and is to receive strip-shaped advertising material (26).

11. A trolley (1) in accordance with Claim 10, characterised in that a carrier is insertable into the recess (12) and is also for carrying advertising material.

12. A trolley (1) in accordance with any one of Claims 1 to 11, characterised in that the space (32) can be covered by a covering (33).

13. A trolley (1) in accordance with any one of Claims 1 to 12, characterised in that the covering (33) is arranged so as to be lockable either with the walls (17) or with a mount connected to the walls (17).

## Revendications

1. Chariot de transport (1) avec un châssis (2), avec des montants (10) se dirigeant vers le haut à l'extrémité arrière (3) du châssis (2) et portant un dispositif de poussée (4), avec une aire de dépôt (5) pour bagages, marchandises ou objets similaires et avec deux pièces nodales (13) situées sur le côté arrière du châssis (2), chaque pièce nodale (13) présentant une aire de fixation (15) pour le support d'un montant (10) et deux parois (17) étant prévues sur l'aire de fixation (15) et destinées au support de l'une des roues (7) faisant partie du châssis (2), **caractérisé en ce que** les pièces nodales (13) font partie intégrante d'un profilé filé, que l'aire de fixation (15) des pièces nodales (13) est creuse et que, à l'extérieur de chaque aire de fixation (15), un espace (32) de logement d'une partie d'un dispositif actif (30), par exemple d'un système de freinage, est formé entre les parois (17) et la roue (7).

2. Chariot de transport (1) selon la revendication 1, **caractérisé en ce** que les barres (22) font partie d'un profilé filé (23).

3. Chariot de transport (1) selon la revendication 2, **caractérisé en ce que** les montants (10) font partie d'un profilé filé (11).

4. Chariot de transport (1) selon l'une des revendications 1 à 3, **caractérisé en ce que**, au moins les pièces nodales (13), de préférence également les barres (22) et les montants (10), sont fabriqués en matériau à base d'aluminium, en particulier en AlMgSio,5F28.

5. Chariot de transport (1) selon l'une des revendications 1 à 4, **caractérisé en ce que** les montants (10) peuvent être introduits dans les pièces nodales (13) par le haut.

6. Chariot de transport (1) selon l'une des revendications 1 à 5, **caractérisé en ce** qu'un trou (19) disposé horizontalement, situé respectivement dans les parois (17) sur un axe commun (18) est prévu et que les trous (19) sont destinés au logement de l'essieu d'une roue (7).

7. Chariot de transport (1) selon l'une des revendications 1 à 6, **caractérisé en ce que** l'aire de fixation (15) des pièces nodales (13) est symétrique aux parois (17).

8. Chariot de transport (1) selon l'une des revendications 1 à 7, **caractérisé en ce que** le profilé filé (23) destiné à la formation des barres (22) présente, dans sa partie supérieure, une encoche (24) s'étendant dans le sens longitudinal, munie de contre-dépouilles, destinée au logement d'un profilé d'appui (25) constitué d'une matière synthétique antiglissante.

9. Chariot de transport (1) selon la revendication 8, **caractérisé en ce que** le profilé d'appui (25) peut être inséré dans l'encoche par encliquetage.

10. Chariot de transport (1) selon l'une des revendications 1 à 9, **caractérisé en ce que** le profilé filé (11) destiné à la formation des montants (10) présente une encoche contre-dépouillée (12) s'étendant dans le sens longitudinal, destinée au logement de matériel publicitaire (26) en forme de bande.

11. Chariot de transport (1) selon la revendication 10, **caractérisé en ce** qu'un support peut être inséré dans l'encoche (12), celui-ci étant lui-même destiné au support de matériel publicitaire.

12. Chariot de transport (1) selon l'une des revendications 1 à 11, **caractérisé en ce que** l'espace (32) peut être recouvert d'un couvercle (33).

13. Chariot de transport (1) selon l'une des revendications 1 à 12, **caractérisé en ce que** le couvercle (33) est disposé de façon à être encliquetable soit avec les parois (17) soit avec une console raccordée aux parois (17).
